# EUROPEAN PATENT APPLICATION

(11) **EP 2 685 189 A1**
(43) Date of publication of application: **15.01.2014**
(21) Application number: 12305847.1
(22) Date of filing: 13.07.2012
(51) Int. Cl.: F25J 1/00

(54) **Process for storing liquid rich in carbon dioxide in solid form**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: Darde, Arthur, 75005 PARIS (FR); Dubettier-Grenier, Richard, 94210 LA VARENNE SAINT HILAIRE (FR); Lockwood, Frederick, 75010 PARIS (FR); Terrien, Paul, 75015 PARIS (FR); Tranier, Jean-Pierre, 94240 L'HAY-LES-ROSES (FR); Traversac, Xavier, 75012 PARIS (FR)
(74) Representative: Mercey, Fiona Susan

(57) **Abstract**

In a process for storing liquid rich in carbon dioxide in solid form and subsequently releasing liquid containing mainly carbon dioxide, a solid (13) containing mainly carbon dioxide is formed from at least part of the liquid (1) with or without using indirect heat exchange means, storing the solid containing mainly carbon dioxide ,the process steps including subsequently causing at least part of the solid containing mainly carbon dioxide to melt forming a liquid containing mainly carbon dioxide, by direct contact with an auxiliary gas (11) rich in carbon dioxide, wherein the auxiliary gas is at least partially liquefied to form liquid containing mainly carbon dioxide by heat exchange with the melting solid and removing at least part of the liquid (7) containing mainly carbon dioxide.

## Description

The present invention relates to a process for storing liquid rich in carbon dioxide in solid form.

It is frequently desirable to store liquid rich in carbon dioxide, a liquid rich in carbon dioxide being defined as containing at least 30% carbon dioxide, preferably at least 60% carbon dioxide.

For example, in the case of a network extracting gas rich in carbon dioxide from various sources wherein the gas is liquefied and then supplied to a consumer, the consumer may have varying requirements and may not require all the liquid rich in carbon dioxide all the time.

It is expensive to store the gas rich in carbon dioxide under pressure and the size of the storage vessels is limited.

The present invention provides a dense phase storage which reduces both footprint and energy.

According to the present invention, there is provided a process for storing liquid rich in carbon dioxide in solid form and subsequently releasing liquid containing mainly carbon dioxide including the following steps:
a) a solid containing mainly carbon dioxide is formed from at least part of the liquid with or without using indirect heat exchange means,
b) storing the solid containing mainly carbon dioxide,
c) subsequently causing at least part of the solid containing mainly carbon dioxide to melt forming a liquid containing mainly carbon dioxide, by direct contact with an auxiliary gas rich in carbon dioxide, wherein the auxiliary gas is at least partially liquefied to form liquid containing mainly carbon dioxide by heat exchange with the melting solid, and
d) during at least part of step c) removing at least part of the liquid containing mainly carbon dioxide.

According to other optional aspects of the invention:
- the operating pressure is such that the carbon dioxide has a partial pressure no more than 1 bar lower than the triple point pressure of CO2 during phase b) and no more than 2 bars higher than the triple point pressure during phase c) and wherein during step a), a solid is formed within a vessel by extracting gas from the vessel, the flowrate of gas extracted from the vessel being is strictly superior to the sum of any gas injected into the equipment due to direct gas injection and or partial flash of liquid inlet linked to the pressure reduction) and of any gas generated by external heating by evaporation of the liquid and/or sublimation of the solid.
- step a. takes place without indirect heat exchange, the liquid rich in carbon dioxide, having a partial pressure for carbon dioxide higher than the triple point pressure, is expanded to a pressure such that the partial pressure for carbon dioxide is lower than the triple point pressure, so as to form a solid containing mainly carbon dioxide and a gas having a reduced content of carbon dioxide.
- the solid is formed in a vessel and the gas rich in carbon dioxide is sent to the vessel.
- the solid is formed in a first vessel, then transferred to a second vessel into which the gas rich in carbon dioxide is introduced, the storing of the carbon dioxide taking place in the first vessel and/or the second vessel.
- the solid is formed in a first vessel, then transferred to a second vessel to be stored and then transferred to a third vessel into which the gas rich in carbon dioxide is introduced.
- the solid is formed in a first vessel, then transferred to a second vessel to be stored and then transferred back to the first vessel into which the gas rich in carbon dioxide is introduced.

The invention also relates to a process for liquefying a feed gas rich in carbon dioxide wherein at least part of the feed gas is at least partially liquefied by cooling to form a liquid rich in carbon dioxide in which:
- during at least a first period
   i) a solid containing mainly carbon dioxide is formed from at least part of the liquid with or without using indirect heat exchange means
   ii) storing the solid containing mainly carbon dioxide and
- during at least a second period
   iii) causing at least part of the solid containing mainly carbon dioxide to melt forming a liquid containing mainly carbon dioxide, by direct contact with an auxiliary gas rich in carbon dioxide, wherein the auxiliary gas is at least partially liquefied to form liquid containing mainly carbon dioxide by heat exchange with the melting solid and
   iv) during at least part of step iii) removing at least part of the liquid containing mainly carbon dioxide.

According to other optional features of the invention
- only part of the liquid rich in carbon dioxide is expanded during the first period, the rest of the liquid rich in carbon dioxide being removed as a product or vaporized to form a gaseous product during the first period and/or the second period.
- the first period corresponds to a period when at least one of the following conditions holds:
   a) where the demand for liquid rich in carbon dioxide or gas derived there from is less than that during the second period,
   b) where the cost of electricity during the first period is less than that during the second period,
   c) where the flowrate of feed gas rich in carbon dioxide during the first period is less than that during the second period.
- at least one of the first and second periods has a duration of less than 24 hours.
- the feed gas rich in carbon dioxide is a waste gas from an oxyfuel combustion process, a steelmaking process, a steam methane reforming process, a gasification process, an ammonia process, an ethanol plant.
- the feed gas rich in carbon dioxide is coming from at least two sources including but not limited to waste gas from at least one oxyfuel combustion process, at least one steelmaking process, at least one steam methane reforming process, at least one gasification process, at least one ammonia manufacturing process, at least one ethanol plant.
- the process comprises purifying the liquid containing carbon dioxide.
- the process comprises vaporizing the liquid containing carbon dioxide and compressing the gas formed.

The invention will be described in greater detail with reference to the figures.

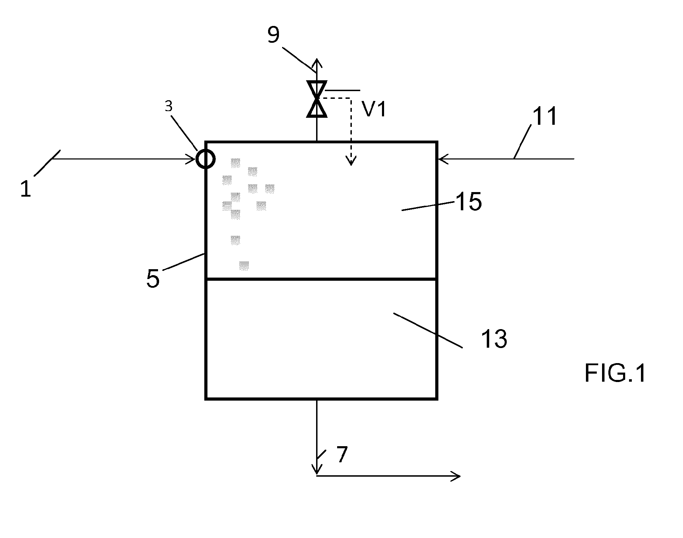

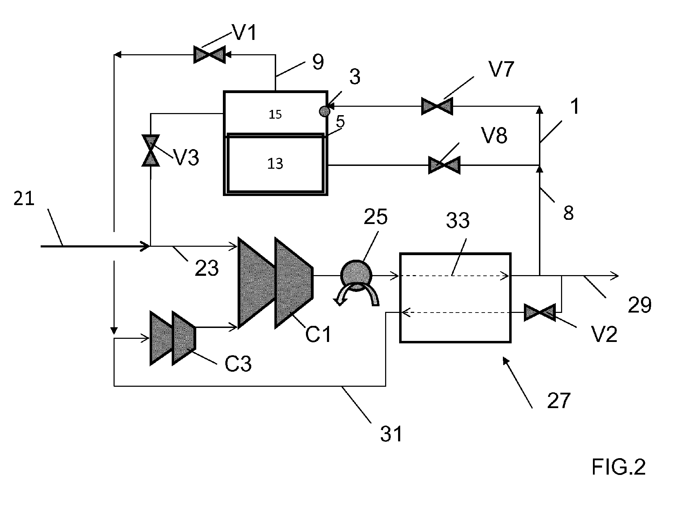

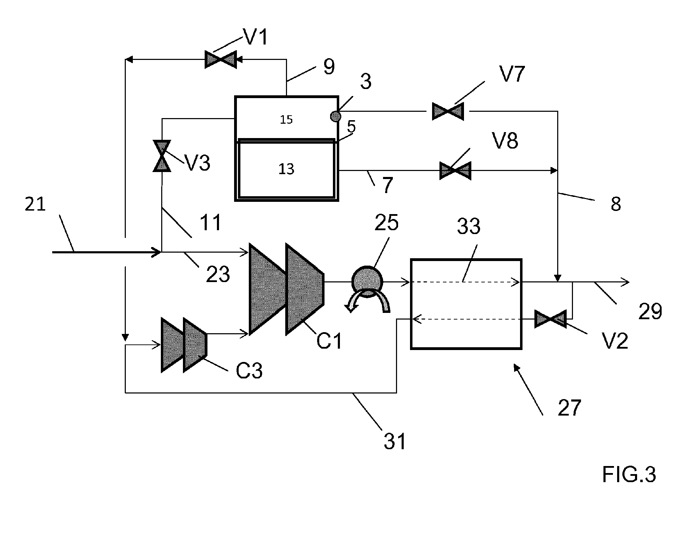

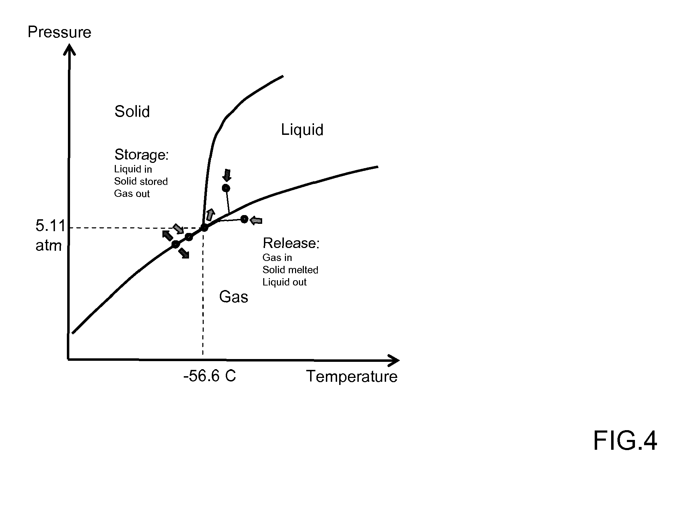

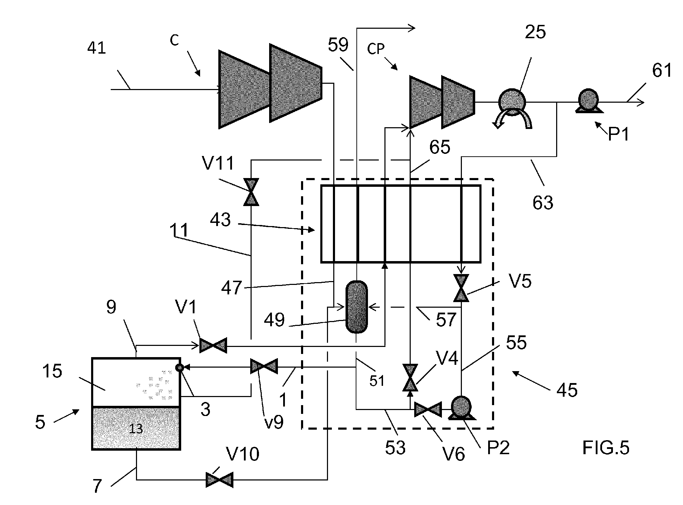

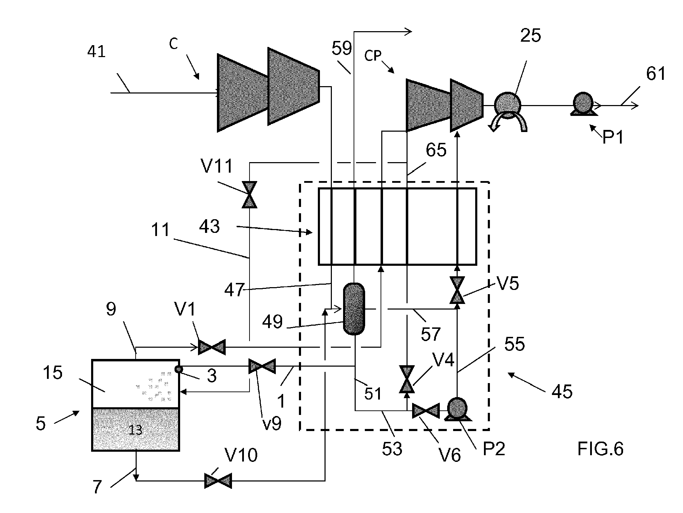

Figure 1 illustrates a storage device for carbon dioxide, Figures 2 and 3 illustrate different operation modes of a carbon dioxide liquefier with an integrated storage device as shown in Figure 1, Figure 4 shows a phase diagram for carbon dioxide and Figures 5 and 6 show different process modes for a carbon dioxide liquefier.

In Figure 1, storage vessel 5 is a reservoir containing no means for mass exchange, such as packing, trays etc. The storage vessel is shown schematically and may be cylindrical in form. The vessel has a liquid outlet in a lower region, here in the base of the vessel. It has a gas outlet in an upper region, here in the roof of the vessel. It also has a gas inlet and a liquid inlet in the upper region. The liquid inlet is formed by an orifice such that when the liquid carbon dioxide is introduced into the vessel, solid carbon dioxide is formed.

In a typical case, liquid carbon dioxide 1 is sent to the vessel 5 via orifice 3. The liquid carbon dioxide contains at least 30% carbon dioxide, preferably at least 60% carbon dioxide. The liquid 1 is at a pressure of 5.5 bars abs and a temperature of -55°C for a carbon dioxide purity higher than 99.9%. Within the vessel 5 the pressure is at 5 bars abs and gaseous carbon dioxide 15 is formed in the upper region leaving solid carbon dioxide 13 in the lower region. In order to store energy, no carbon dioxide is removed via the liquid outlet 7 and no gas 11 is introduced via the gas inlet. In order to control the pressure, some gas 9 may be removed by opening valve V1. This mode of operation is called "storage mode".

Alternatively, during the "storage mode", the vessel 5 can be kept at a carbon dioxide partial pressure equal to the triple point pressure (5.11 atm) and the injection of liquid through does not directly produce solid. In this alternative, solid is formed from the liquid in the tank by extraction of gas in the vessel. The gas extraction is controlled by flow control means (typically a downstream compressor will impose the flow). The operating pressure may decrease to at most 1 bar below the triple point for the partial pressure of the carbon dioxide.

In order to release energy, when no liquid 1 is sent to the vessel, carbon dioxide gas 11 is sent to the gas inlet at a pressure of 5.5 bars and saturation temperature. This causes some of the solid to melt, such that the three phases of carbon dioxide are simultaneously present in the vessel, which is under triple point conditions for the partial pressure of the carbon dioxide. No gas 9 is removed from the gas outlet but liquid 7 is removed from the lower region of the vessel 5. This mode of operation is called "release mode". The operating pressure may increase to at most 2 bar above the triple point for the partial pressure of the carbon dioxide.

In Figures 2 and 3, a variable gaseous carbon dioxide feed 21 is to be liquefied. Two modes of operation are possible, depending on the amount of feed 21. In Figure 2, the feed 21 is low, all the feed is sent to compressor C1 as stream 23, compressed to a pressure of 75 bar abs, cooled in cooler 25 to form stream 33 and further cooled in heat exchanger 33 so as to be liquefied. Heat exchanger 27 may be of the plate fin type. Part of the liquid formed is removed as product 29. Another fraction 31 is expanded in valve V2 to produce refrigeration, warmed in heat exchanger 27 and compressed in recycle compressor C3, before being sent to the inlet of compressor C1. The rest 1 of the liquid is sent to the storage vessel 5 to be stored via conduit 8 and valve V7. The liquid 1 is expanded in orifice 3 and thereby partially frozen, forming solid carbon dioxide 13 and gaseous carbon dioxide 15. The gaseous carbon dioxide 9 is removed from the gas outlet in the top of the storage vessel via valve V1 and also sent to the recycle compressor C3. Thus the carbon dioxide is stored with the storage vessel in solid form. This mode of operation is called "storage mode".

In Figure 3, there is a high flow gaseous carbon dioxide feed 21 which is divided in two. Part 23 is sent to compressor C1 as stream 23, compressed to a pressure of 75 bar abs, cooled in cooler 25 to form stream 33 and further cooled in heat exchanger 33 so as to be liquefied. Heat exchanger 27 may be of the plate fin type. Part of the liquid formed is removed as product 29. Another fraction 31 is expanded in valve V2 to produce refrigeration, warmed in heat exchanger 27 and compressed in recycle compressor C3, before being sent to the inlet of compressor C1.

Another part 11 of the feed is sent in gaseous form via valve V3 to the storage vessel 5, thereby causing at least part of the solid carbon dioxide to melt. The liquid carbon dioxide 7 is removed from the liquid outlet (here in the side of the vessel) via valve V8 and added to the liquid formed in exchanger 27 via conduit 8, thereby forming part of the product 29. This mode of operation is called "release mode". Thus more liquid carbon dioxide product 29 is produced in the mode of Figure 3 than in the mode of Figure 2.

Figure 4 shows the triple point at 5.11 atm and -56.6°C. In the storage mode, as shown in Figure 2, the liquid is sent to the storage vessel, solidified and the solid is stored, whilst gas is removed. In the release mode, as shown in Figure 3, gas is sent to the storage vessel, thereby causing the solid to melt and providing liquid to be removed from the storage vessel.

Figures 5 and 6 show a slightly more complex liquefier in which there is additionally a separation step.

Under normal operation, the process of Figure 5 operates as follows. Flue gas 41 or any gas rich in carbon dioxide is sent to a compressor C in which it is compressed, the compressed gas being then cooled in heat exchanger 43 within a cold box 45. The gas is thereby partially condensed and is sent to a phase separator 49. The gas formed 59 is warmed in the heat exchanger 43 and removed as non-condensable gas. The liquid 51 is expanded in valve V4, vaporized in heat exchanger 43, compressed in product compressor CP, cooled in cooler 25 to its liquefaction point and then compressed by pump P1 to form a supercritical liquid carbon dioxide product. Of course other product pressures are possible. The liquid need not be pumped and the product may be produced in gaseous form, upstream or downstream of the compressor CP. In this case, the apparatus is still considered to be a liquefier since a liquid is formed therein. In this case, no fluid is sent to or from storage vessel 5, the pump P2 is not operational and the recycle 63 is not operational.

When the flue gas feed 41 is high, the gas 41 is sent to compressor C in which it is compressed, the compressed gas being then cooled in heat exchanger 43 within cold box 45. The gas is thereby partially condensed and is sent to a phase separator 49. The gas formed 59 in the phase separator is warmed in the heat exchanger 43 and removed as non-condensable gas. The liquid 51 is divided in two. Part 53 is expanded in valve V4, vaporized in heat exchanger 43, compressed in product compressor CP, cooled in cooler 25 to its liquefaction point and then compressed by pump P1 to form a supercritical liquid carbon dioxide product. Of course other product pressures are possible. The liquid need not be pumped and the product may be produced in gaseous form, upstream or downstream of the compressor CP. In this case, the apparatus is still considered to be a liquefier since a liquid is formed therein. Recycle 63 sends part of the liquid from cooler 25 back to exchanger 43 and to the phase separator via conduit 57.

Part 1 of the liquid from phase separator 49 is sent to the storage vessel 5 via valve V9. It expands through orifice 3 to form solid carbon dioxide 13 and gaseous carbon dioxide 15. Gas 9 is removed from the storage vessel via valve V1 and is warmed and sent to product compressor CP. No liquid is removed and no gas is sent to the vessel. Thus solid carbon dioxide accumulates in the storage vessel.

In this case, the pump P2 is not operational. This mode of operation is called "storage mode".

In Figure 6, the amount of gas to be liquefied is reduced. Flue gas 41 or any gas rich in carbon dioxide is sent to compressor C in which it is compressed, the compressed gas being then cooled in heat exchanger 43 within cold box 45. The gas is thereby partially condensed and is sent entirely to phase separator 49. The gas formed 59 is warmed in the heat exchanger 43 and removed as non-condensable gas. The liquid 51 is expanded in valve V4, vaporized in heat exchanger 43 to form gas 65, compressed in part in product compressor CP, cooled in cooler 25 to its liquefaction point and then compressed by pump P1 to form a supercritical liquid carbon dioxide product. Of course other product pressures are possible. The liquid need not be pumped and the product may be produced in gaseous form, upstream or downstream of the compressor CP. In this case, the apparatus is still considered to be a liquefier since a liquid is formed therein.

Part 11 of the gas 65 formed by vaporizing liquid from the phase separator is sent via valve V11 to the storage vessel 5. Sent into the vessel, it causes the solid carbon dioxide to liquefy and liquid 7 is removed from the storage vessel 5 via valve V10. No liquid 1 is sent to the vessel and no gas 9 is removed therefrom. The liquid 9 is sent back to the phase separator. To vaporize this increased amount of liquid, it may be possible to send all the liquid 51 from the phase separator 49 to valve V4 and vaporize it at a single pressure. However Figure 6 shows the option where part of the liquid is vaporized in this way and then rest 55 is sent via valve V6 to second pump P2, pumped to a higher pressure, then heated through heat exchanger 43 and produced as a supercritical CO2 stream to be further pumped through pump P1. ...

The recycle 63 is not operational and so is not shown to simplify the figure and no liquid flows in conduit 57.

This mode of operation is called "release mode".

The modes of operation described in Figures 2 and 3 and in Figures 5 and 6 are described in the context of using the storage mode when flowrate of feed gas is higher than a first given value and using the release mode when flowrate of feed gas is below a second given value, equal to or lower than the first given value. However other criteria may be used to determine when the storage and release modes may be used. For example, if the demand for liquid rich in carbon dioxide or gas derived therefrom is lower than a first given value, the storage mode may be used. If the demand for liquid rich in carbon dioxide or gas derived therefrom is higher than a second given value, equal to or higher than the first given value, the release mode may be used. Alternatively, the storage mode may be used when the cost of electricity is below a first given value and the release mode may be used when the cost of electricity is above a second given value, equal to or higher than the first given value.

## Claims

1. Process for storing liquid rich in carbon dioxide in solid form and subsequently releasing liquid containing mainly carbon dioxide including the following steps:
a) a solid (13) containing mainly carbon dioxide is formed from at least part of the liquid (1) with or without using indirect heat exchange means
b) storing the solid containing mainly carbon dioxide
c) subsequently causing at least part of the solid containing mainly carbon dioxide to melt forming a liquid containing mainly carbon dioxide, by direct contact with an auxiliary gas (11) rich in carbon dioxide, wherein the auxiliary gas is at least partially liquefied to form liquid containing mainly carbon dioxide by heat exchange with the melting solid and
d) during at least part of step c) removing at least part of the liquid (7) containing mainly carbon dioxide.

2. Process according to claim 1, where the operating pressure is such that the carbon dioxide has a partial pressure no more than 1 bar lower than the triple point pressure of CO2 during phase b) and no more than 2 bars higher than the triple point pressure during phase c) and wherein during step a), a solid is formed within a vessel (5) by extracting gas from the vessel, the flowrate of gas extracted from the vessel being is strictly superior to the sum of any gas injected into the equipment by direct gas injection or partial flash of liquid inlet linked to the pressure reduction and any gas generated by external heating by evaporation of the liquid and sublimation of the solid.

3. Process according to claim 1, wherein step a. takes place without indirect heat exchange, the liquid rich in carbon dioxide, having a partial pressure for carbon dioxide higher than the triple point pressure, is expanded to a pressure such that the partial pressure for carbon dioxide is lower than the triple point pressure, so as to form a solid containing mainly carbon dioxide and a gas having a reduced content of carbon dioxide.

4. Process according to at least one of Claims 1 to 3, wherein the solid is formed in a vessel (5) and the gas (11) rich in carbon dioxide is sent to the vessel.

5. Process according to at least one of Claims 1 to 3, wherein the solid is formed in a first vessel, then transferred to a second vessel into which the gas rich in carbon dioxide is introduced, the storing of the carbon dioxide taking place in the first vessel and/or the second vessel.

6. Process according to at least one of Claim 1 to 3 or 5, wherein the solid is formed in a first vessel, then transferred to a second vessel to be stored and then transferred to a third vessel into which the gas rich in carbon dioxide is introduced

7. Process according to at least one of Claims 1 to 3, wherein the solid is formed in a first vessel, then transferred to a second vessel to be stored and then transferred back to the first vessel into which the gas rich in carbon dioxide is introduced.

8. Process for liquefying a feed gas rich in carbon dioxide wherein at least part of the feed gas (11, 21,41) is at least partially liquefied by cooling to form a liquid rich in carbon dioxide in which:
- during at least a first period
i) a solid (13) containing mainly carbon dioxide is formed from at least part of the liquid (1) with or without using indirect heat exchange means
ii) storing the solid containing mainly carbon dioxide and
- during at least a second period
iii) causing at least part of the solid containing mainly carbon dioxide to melt forming a liquid containing mainly carbon dioxide, by direct contact with an auxiliary gas (11) rich in carbon dioxide, wherein the auxiliary gas is at least partially liquefied to form liquid containing mainly carbon dioxide by heat exchange with the melting solid and
iv) during at least part of step iii) removing at least part of the liquid (7) containing mainly carbon dioxide.

9. Process according to Claim 8, wherein only part of the liquid (1) rich in carbon dioxide is expanded during the first period, the rest of the liquid rich in carbon dioxide being removed as a product or vaporized to form a gaseous product during the first period and/or the second period.

10. Process according to Claim 8 or 9, wherein the first period corresponds to a period when at least one of the following conditions holds:
a) where the demand for liquid rich in carbon dioxide or gas derived there from is less than that during the second period,
b) where the cost of electricity during the first period is less than that during the second period,
c) where the flowrate of feed gas (11, 21,41) rich in carbon dioxide during the first period is less than that during the second period.

11. Process according to one of claims 8 to 10, where at least one of the first and second periods has a duration of less than 24 hours.

12. Process according to one of Claims 1 to 11, wherein the feed gas rich in carbon dioxide (11, 21,41) is a waste gas from an oxyfuel combustion process, a steelmaking process, a steam methane reforming process, a gasification process, an ammonia process or an ethanol plant.

13. Process according to one of Claims 1 to 12, where the feed gas rich in carbon dioxide (11, 21,41) is coming from at least two sources including but not limited to waste gas from at least one oxyfuel combustion process, at least one steelmaking process, at least one steam methane reforming process, at least one gasification process, at least one ammonia manufacturing process, at least one ethanol plant.

14. Process according to claim 1 to 13, comprising purifying the liquid (7) containing carbon dioxide.

15. Process according to claim 1 to 14, comprising vaporizing the liquid (55) containing carbon dioxide and compressing the gas thereby formed.
